# EUROPEAN PATENT APPLICATION

(11) **EP 2 769 623 A1**
(43) Date of publication of application: **27.08.2014**
(21) Application number: 13164659.8
(22) Date of filing: 22.04.2013
(51) Int. Cl.: A23C 9/152, A23L 3/3445, A23L 2/54

(54) **Method for making a foaming beverage, and related composition**

(30) Priority: 20.02.2013 US 201313771114
(71) Applicant: Linde Aktiengesellschaft, 80331 München (DE)
(72) Inventor: Finley, Steven, Wayne, NJ 07470 (US)
(74) Representative: Hofmann, Andreas

(57) **Abstract**

In order to overcome the problems that earlier methods and beverages have experienced, a method of making a foamy beverage is proposed, comprising
- providing a liquid having at least one lipid-based ingredient (12, 12') therein and
- adding argon gas (14) to the liquid to provide a mixture for the foamy beverage.

## Description

### Technical field of the present invention

The present invention relates to a method of making a foamy beverage as well as to a beverage having a foamy composition; more particularly, the present invention relates to providing a beverage with a foamy appearance and a creamy mouth feel, and related compositions.

### Technological background of the present invention

Methods are known for preparing foam for carbonated beverages which contain dairy and/or hydrocolloidal compositions. Some of these methods include mixing carbon dioxide (CO₂) and nitrous oxide (N₂O) usually ranging from 25 percent CO₂/75 percent N₂O to 75 percent CO₂ / 25 percent N₂O to create such a foamy beverage.

Other methods are known for creating a foamy beverage containing milk by injecting N₂O or other gases, such as Hydrofluorocarbons (HFC) or Hydrochlorofluorocarbons (HCFC), into the beverage.

It is also known that N₂O is a desirable gas because of its solubility in lipids, such that the N₂O can be injected into dairy products to produce a foaming effect in such products. An example of N₂O in food products is its use in whipped cream.

During the process for producing the whipped cream, N₂O is mixed with heavy cream under pressure and under those conditions, a significant amount of the gas can be added under pressure to the cream forming small bubbles within the mixture.

While under pressure, the gas-cream mixture remains stable and in fact, N₂O provides protection against spoilage due to microorganism activity. As a result, whipped cream stored with N₂O has a longer shelf life than whipped cream stored alone.

The foregoing preservation effective N₂O works well with a full range of lipids or fat-based products, beyond just dairy products. For example, N₂O can also be used as a propellant gas for spray-type vegetable oil products. In addition to the preservation benefits of N₂O, oxygen is also displaced by N₂O, thereby protecting the oil from becoming rancid.

When a cream nitrous oxide mixture is dispensed from the pressurized container holding same, the pressure of the mixture is reduced considerably, including the pressure on fine bubbles of N₂O dispersed in the cream.

As a result of the pressure reduction, the fine bubbles in the mixture expand, which results in the volume of the mixture increasing substantially. Such is the effect witnessed when the whipped cream is dispensed from its container.

However, in addition to the benefits offered by N₂O, there are some disadvantages that the chemical compound has and which are of concern, in particular to manufacturers of food products. For example, N₂O produces an analgesic effect when inhaled.

There are recorded examples of recreational use of N₂O resulting in serious injury and in some instances death by asphyxiation as a result of abuse by persons unfamiliar with proper use and the associate risks of N₂O.

N₂O is a strong greenhouse gas having global warming potentials (GWP) in excess of 20 times that of carbon dioxide (CO₂). With HFCs and HCFC, the GWP can be greater than 1,000 and even higher than 10,000 for some compounds.

Such compounds may also contribute to depletion of the ozone layer and are heavily regulated as a result of these properties. The State of California has regulated N₂O due to its link to harmful effects that may be caused to the human reproductive system from improper use of N₂O. In California, N₂O is listed as a harmful substance, and food manufacturers are required by law to label a product with a notice that the product contains ingredients which may be harmful.

Although N₂O is very effective as an agent for modifying the texture and mouthful of beverages and providing a preservation to certain products, it has certain disadvantages and therefore, for food producers in particular, an alternative ingredient would be desirable.

### Disclosure of the present invention: object, solution, advantages

Starting from the disadvantages and shortcomings as described above and taking the prior art as discussed into account, an object of the present invention is to overcome the problems that earlier methods and beverages have experienced.

This object is accomplished by a method comprising the features of claim 1 as well as by a beverage comprising the features of claim 11. Advantageous embodiments and expedient improvements of the present invention are disclosed in the respective dependent claims.

Basically, the present invention provides for making foamy beverages containing lipids, and related compositions.

More particularly, the present invention provides for a method of making a foamy beverage including providing a liquid having at least one lipid-based ingredient therein and adding argon (Ar) gas to the liquid to provide the foamy beverage and/or a mixture for the foamy beverage.

A beverage having a foamy composition and creamy mouth feel is also provided and includes a liquid mixture having at least one lipid-based ingredient therein and argon (Ar) gas mixed into the liquid mixture.

In an advantageous embodiment of the present invention, at least two ingredients are provided, wherein at least one of these at least two ingredients is lipid-based. The ingredients can expediently be mixed in at least one mixing station prior to providing the argon gas into the ingredient mixture. The argon gas provided may preferably be injected into the mixture to facilitate dissolving the argon in the mixture.

After mixing the at least one lipid-based ingredient and the argon gas, the mixture may expediently be held at a select pressure, for example in at least one holding station and/or in at least one storage tank.

From there, the beverage mixture containing the argon may favourably be filled into at least one container.

A pressure balance may preferably be maintained between the holding and the filling so that the beverage mixture does not unintentionally expand prior to being filled into at least one individual container for later being discharged and consumed. In particular, the pressure balance may be applied to the at least one holding station or to the at least one storage tank to maintain the argon to be mixed with the ingredients.

In case the argon gas provided to the lipid-based ingredient creates turbulence sufficient enough that the mixing step does not have to be used, the resulting beverage containing the lipid-based ingredient mixed with the argon gas may preferably be provided without the mixing step, i. e. immediately to the at least one holding station and/or to the at least one storage tank for holding.

According to an advantageous embodiment of the present invention,
- the at least one lipid-based ingredient is at from about 25 percent by weight to 100 percent by weight of the foamy beverage; and
- the argon gas is at from about 0.02 percent by weight to about 0.15 percent by weight of the foamy beverage.

According to an expedient embodiment of the present invention, the at least one lipid-based ingredient comprises at least one ingredient selected from milk, plant oil, other lipid-containing ingredients, and a combination thereof in which the argon gas can be dissolved under pressure.

In combination therewith or independently thereof, the milk may be selected from the group consisting of cow milk, goat milk, soy milk, almond milk and coconut milk.

Expediently, the liquid or liquid mixture may be selected from the group consisting of syrup, coffee, juice, fruit-dairy mixtures, chocolate-dairy mixtures, cow milk, goat milk, soy milk, almond milk and coconut milk.

In more detail, the present invention is a method for making a foamy beverage by mixing a lipid-containing liquid or beverage with gaseous argon (Ar) to improve the appearance and to provide a creamy mouth feel of the beverage. A foamy beverage containing argon is also provided. Reference herein to "argon" means "argon gas", unless otherwise indicated.

The benefits of argon (Ar) are similar to those found in nitrous oxide, but without the adverse consequences associated with nitrous oxide. The specific effect achieved by adding, in particular by injecting, argon gas into a lipid-containing beverage is the modification of the appearance, texture and mouth feel of this beverage.

An advantageous embodiment of the present invention provides for a method to improve the appearance and mouth feel of a beverage which contains fats and/or oils in such compositions.

The argon gas may preferably be added to the mixture under pressure. In combination therewith or independently thereof,
- the pressure may be maintained after the mixing, and/or
- the pressure may be reduced for expanding bubbles in the mixture.

According to an expedient embodiment of the present invention, the water and lipid components of the beverage may be de-aerated to displace dissolved air or oxygen in the beverage or liquid prior to the mixing of the argon gas with the beverage or liquid, i. e. more specifically to displace air or oxygen and nitrogen from the beverage or liquid prior to the addition of the argon gas.

The beverage may be for example a fruit juice or vegetable juice of any flavour or a combination of fruit juice and vegetable juice, a liquid with a flavoured syrup, or milk from coconut, soy or almond. In the beverage, use of the method according to the present invention will provide a thick, foamy, creamy head. The base liquid for the beverage does not have to be carbonated.

A favoured embodiment of the present invention calls for preparation of the beverage by having argon gas mixed with at least one particular liquid or beverage. An amount of argon to be mixed with the beverage is determined by the amount of lipid-based ingredients in the beverage, for example, a ratio of dairy to the water-based components.

Further, the quantity of argon to be mixed into the beverage is determined by the desired effect, specifically, the desired increase in volume and consistency of the head or foam to be produced in the beverage.

Preferably, the quantity of argon gas that can be mixed into the liquid is a function
- of the temperature of the liquid and/or
- of the pressure of the liquid.

The addition of the argon gas to the beverage is itself sufficient to also increase the pressure of the mixture to thereby permit an increase in the amount of argon that can be contained in the beverage. This occurs when, for example, the argon gas is added to the liquid or existing mixture by injection.

Generally, increasing the pressure of the mixture with the argon or increasing the pressure of the liquid as the argon is being added permits the beverage or mixture to contain an increased amount of the argon gas.

A preferred pressure range for mixing the argon into the beverage or mixture may be from about 1 barg to about 10 barg (from about 14.5 psig to about 145 psig), in particular from about 4 barg to about 6 barg (from about 58 psig to about 87 psig), by way of example only.

When the temperature of the liquid, especially of the mixture or beverage, is advantageously decreased, the liquid's capacity to contain an amount of the argon gas can be increased as well.

Effective mixing of the argon with the lipid-containing beverage can be achieved at a preferred temperature range from about 0°C to about 10°C (from about 32°F to about 50°F), in particular from about 1°C to about 5.5°C (from about 33.8°F to about 42°F), by way of example only.

The amount of argon gas added to the lipid-containing beverage will solubilise with the lipid-containing portion of the beverage and the water in the beverage. However, it is that portion of the argon gas dissolved in the lipid portion of the beverage that produces the foamy, creamy effect of the beverage.

The argon is dissolved and comes out of solution as a gas to create a foam for the beverage. This enhances the appearance and the mouth feel of non-carbonated beverages that contain a significant amount of lipid-based ingredients, such as for example dairy based beverages.

According to an advantageous embodiment, the present invention may comprise the additional steps of
- comprising packaging the mixture in a container for holding the liquid mixture at a first pressure;
- disposing a pressurized capsule containing another amount of argon gas in the container, the capsule disposed in the liquid mixture for holding the another amount of argon gas at a second pressure less than the first pressure and greater than atmospheric pressure;
- opening the container to discharge the mixture; and
- rupturing the pressurized capsule for releasing and mixing the another amount of argon gas with the mixture to provide the foamy beverage.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1 and on claim 11; further improvements, features and advantages of the present invention are explained below in more detail with reference to preferred embodiments by way of non-limiting example and to the appended drawing figure taken in conjunction with the description of the embodiments, of which:
- Fig. 1: shows a flowchart for a first embodiment of a method according to the present invention; and
- Fig. 2: shows a flowchart of another embodiment of a method according to the present invention.

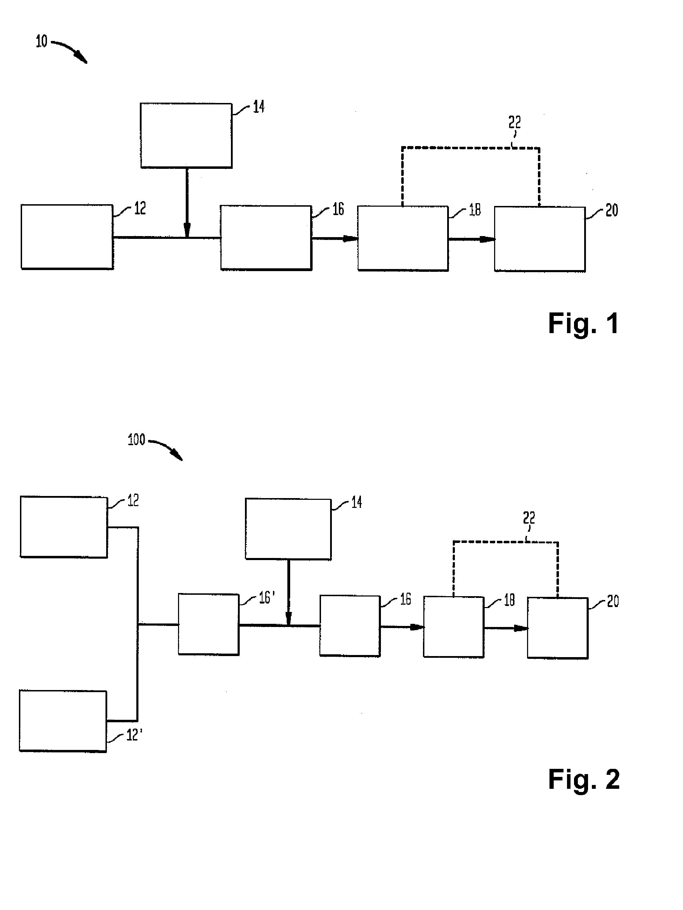

In the appended drawing figures, like equipment is labelled with the same reference numerals throughout the description of Fig. 1 and Fig. 2.

### Detailed description of the drawings; best way of embodying the present invention

Referring to Fig. 1, an embodiment of a flowchart for the present method is shown generally at 10, and includes providing an ingredient "A" 12 into which argon is added 14, by injection for example, to provide a mixture, after which the ingredient 12 and the argon may be mixed 16 and then held 18 in a holding station or storage tank, in particular at a select pressure.

From there, a filling step 20 for the beverage mixture containing the argon will be used to fill containers.

A pressure balance 22 is maintained between the holding 18 and the filling 20 so that the beverage mixture does not unintentionally expand prior to being filled into containers for consumption.

Still referring to Fig. 1, the argon 14 provided to the ingredient 12 may create turbulence sufficient enough that the mixing step 16 does not have to be used and the resulting beverage containing the ingredient 12 mixed with the argon gas 14 can be provided immediately to the station or tank 18 for holding.

Referring now to Fig. 2, in another embodiment shown generally at 100, an ingredient "B" 12' is additionally added with the ingredient 12. The ingredients 12, 12' are mixed at the mixing station 16' prior to providing the argon 14 into the ingredient mixture. The argon gas 14 provided may be injected into the mixture to facilitate dissolving the argon in the mixture.

Similar to that which occurred above with respect to the method embodiment of Fig. 1, after the argon 14 is provided into the mixture, the mixture can again be mixed at the station 16 prior to being delivered to the holding station or tank for holding.

Alternatively, if the argon injection 14 is of a turbulence sufficient to mix the argon into the ingredients 12, 12', then the mixing step 16 does not have to employed and the mixture can proceed immediately to the holding station or tank.

In Fig. 2, since there are ingredients A, B (12, 12', respectively), at least one of the ingredients 12, 12' would have a lipid-based ingredient therein, or alternatively both can have the ingredient. The pressure balance 22 is maintained between the holding 18 and the filling 20 so that the beverage mixture does not unintentionally expand prior to being filled into containers for consumption.

With respect to both the Fig. 1 and Fig. 2, providing the argon gas 14 to the mixture should be at a pressure sufficient to mix the argon with the ingredients 12, 12'. In addition, the pressure balance 22 is applied to the holding tank or station to maintain the argon to be mixed with the ingredients 12, 12'.

As with Fig. 1, the pressure balance 22 is maintained between the holding 18 and the filling 20 so that the beverage mixture does not unintentionally expand prior to being filled into the individual containers for later being discharged and consumed.

The ingredients 12, 12' can be syrup, coffee, juice, fruit-dairy mixtures, chocolate-dairy mixtures, cow milk, goat milk, soy milk, almond milk and coconut milk.

The following examples are with respect to the embodiments of the present invention.

### Example 1:

In a first representative embodiment, argon gas is mixed with a liquid ingredient or beverage containing lipids using known equipment, such as equipment used in the soft drink industry for carbonation. The water and lipid components of the beverage are de-aerated to displace dissolved oxygen in the beverage, i. e. more specifically to displace oxygen and nitrogen from the beverage prior to the addition of the argon gas.

A temperature controlled pressure vessel with gas dissolution device including venturi-type gas injectors, porous stone or metal spargers, spray mixtures, agitators or trays can be used to increase the exposed surface area of the beverage to the argon gas when mixing the gas into the beverage. When the argon is mixed with the beverage, the mixture is maintained under pressure to maintain the gas-beverage mixture.

If the pressure is reduced, which is likely to occur just prior to consuming the beverage, the smaller bubbles that are captive in the mixture will expand, thereby producing the desired effect of a foamy, creamy head which can last for up to thirty minutes.

### Example 2:

In still another embodiment, argon gas is mixed with a beverage containing lipids, the mixing being done with a carbonator device; typically used to dissolve CO₂ into beverages that do not contain lipids.

The argon gas can be provided from a source such as a pressurized tank or cylinder (not shown). Even if the argon is under pressure as a liquid in the tank, upon release, the liquid argon will expand and phase to a gas, vapour or atomized jet or stream.

It has been discovered that argon gas exhibits considerably higher solubility in lipid-containing beverages, compared with many other gases. Injecting argon under pressure into a lipid-based beverage produces a thicker consistency and a creamy head on the beverage.

### Example 3:

This experiment resulted in an increase in volume (volume at atmospheric pressure divided by volume at high pressure) of 18.8 percent when the beverage was injected with pure argon gas at a pressure of 72 psig. For comparison purposes, a benchmark test using nitrogen under similar conditions resulted in expansion of only 4.9 percent.

In this experiment, argon gas was injected into whole milk using a porous sintered metal sparger into a tube used to transfer the mild to a holding tank. The holding tank was maintained under pressure (72 psig) in a vessel pressurized with gaseous nitrous oxide. The treated milk was dispensed under pressure into a two liter polyethylene terephthalate (PET) plastic beverage bottle.

To determine the rate of expansion, the pressure in the PET bottle was reduced to atmospheric pressure to simulate the action of a consumer opening the bottle prior to consumption. The volume of the treated milk was measured under pressure again after the pressure was released. The volume of milk under pressure was 1.430 ml, which increased to 1.690 ml after the pressure was released. The calculated result was an 18.8 percent expansion.

Argon does not react with ingredients, because it is an inert gas, thereby preserving the original taste of the beverage. It is also effective in displacing dissolved oxygen from the beverage which provides the added benefit of protecting the beverage from the detrimental effect of oxidation of compounds that are reactive with oxygen. By displacing oxygen, argon also limits spoilage caused by aerobic micro-organisms.

Examples above demonstrated that argon is a highly effective gas for modifying the appearance, texture and mouth feel for lipid-containing beverages. The amount of argon that can be mixed into a beverage is a function of the temperature and pressure of the beverage during mixing.

Effective mixing of argon with lipid-containing beverages can be achieved at a temperature range from 1°C to 5.5°C (33.8°F to 42°F). During testing, effective mixing was accomplished when the temperature was 5.5°C (42°F). Testing demonstrated that lowering the temperature of the beverage increases the effectiveness of mixing the argon with the liquid for the beverage. Generally, increasing the pressure of the mixture increases the beverage's capacity for containing argon. The recommended pressure range for mixing argon into the beverage is 4 barg to 6 barg (58 psig to 87 psig).

During the tests, the argon gas was injected using a sintered metal sparger at the temperature and pressure conditions indicated above. During commercial production, more accurate control of temperature and pressure, as well as more effective mixing technologies, can be implemented to improve the effectiveness of argon gas/liquid mixing, including venturi, spray mixing or other gas liquid mixing technologies known in the field.

In comparison to N₂O, argon is a safer ingredient for beverage consumers. In addition, argon does not exhibit the harmful effects to the environment as does N₂O; specifically global warming potential and ozone depletion.

Argon is Generally Recognized As Safe (GRAS) by the U.S. Food and Drug Administration (FDA).

Argon does not carry the risk of the narcotic effect of N₂O. It is undesirable and in certain instances illegal for a beverage brand owner to add to their products an ingredient that is used either medically or recreationally to produce a mind-altering effect.

Devices used to mix the argon gas in the lipid-based ingredient may include a temperature controlled pressure vessel with a gas dissolution device, including venturi-type gas injectors, spray mixers or trays, to increase the exposed surface area of the liquid to the gas.

Once the argon gas is mixed with the beverage, the mixture must be kept under pressure to maintain the gas/liquid mixture. Once the pressure is reduced; preferably just prior to consuming the beverage, the small bubbles that are captive in the mixture will expand; producing the desired effect which will last for up to thirty minutes.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference numerals

- 10: flowchart of first embodiment
- 100: flowchart of second embodiment
- 12: ingredient, in particular first ingredient or ingredient A
- 12': second ingredient or ingredient B (second embodiment; cf. Fig. 2)
- 14: argon or argon gas, in particular argon addition or argon injection
- 16: mixing or mixing station or mixing step
- 16': mixing or mixing station or mixing step (second embodiment; cf. Fig. 2)
- 18: holding or holding step, in particular in a holding station or in a storage tank
- 20: filling or filling step
- 22: pressure balance

## Claims

1. A method of making a foamy beverage, comprising
- providing a liquid having at least one lipid-based ingredient (12, 12') therein and
- adding argon gas (14) to the liquid to provide a mixture for the foamy beverage.

2. The method according to claim 1, further comprising mixing (16), in particular
- at a temperature of from about 0°C to about 10°C (from about 32°F to about 50°F), in particular from about 1°C to about 5.5°C (from about 33.8°F to about 42°F), and/or
- at a pressure from about 1 barg to about 10 barg (from about 14.5 psig to about 145 psig), for example from about 4 barg to about 6 barg (from about 58 psig to about 87 psig), the liquid and the argon gas (14).

3. The method according to claim 1 or 2, further comprising adding the argon gas (14) to the mixture under pressure.

4. The method according to claim 3, further comprising
- maintaining the pressure after the mixing (16), and/or
- reducing the pressure for expanding bubbles in the mixture.

5. The method according to at least one of claims 1 to 4, further comprising displacing dissolved air in the liquid prior to the mixing (16) of the argon gas (14) with the liquid.

6. The method according to at least one of claims 1 to 5, further
- comprising packaging the mixture in a container at a first pressure;
- disposing a pressurized capsule containing another amount of argon gas in the container, the pressurized capsule at a second pressure less than the first pressure and greater than atmospheric pressure;
- opening the container to discharge the mixture; and
- rupturing the pressurized capsule for releasing and mixing the another amount of argon gas with the mixture to provide the foamy beverage.

7. The method according to at least one of claims 1 to 6, further comprising decreasing a temperature of the liquid for increasing an amount of the argon gas (14) to be contained in the mixture.

8. The method according to at least one of claims 1 to 7, further comprising storing the mixture at a select pressure.

9. The method according to at least one of claims 1 to 8, wherein
- the at least one lipid-based ingredient (12, 12') is at from about 25 percent by weight to 100 percent by weight of the foamy beverage; and
- the argon gas (14) is at from about 0.02 percent by weight to about 0.15 percent by weight of the foamy beverage.

10. The method according to at least one of claims 1 to 9, wherein the liquid is selected from the group consisting of syrup, coffee, juice, fruit-dairy mixtures, chocolate-dairy mixtures, cow milk, goat milk, soy milk, almond milk and coconut milk.

11. A beverage having a foamy composition, comprising
- a liquid mixture having at least one lipid-based ingredient (12, 12') therein and
- argon gas (14) mixed (16) into the liquid mixture.

12. The beverage according to claim 11, further comprising
- a container for holding (18) the liquid mixture at a first pressure; and
- a capsule with another amount of argon gas contained therein, the capsule disposed in the liquid mixture for holding the another amount of argon gas at a second pressure less than the first pressure and greater than atmospheric pressure.

13. The beverage according to claim 11 or 12, wherein
- the at least one lipid-based ingredient (12, 12') is at from about 25 percent by weight to 100 percent by weight of the foamy beverage; and
- the argon gas (14) is at from about 0.02 percent by weight to about 0.15 percent by weight of the beverage.

14. The beverage according to at least one of claims 11 to 13, wherein the at least one lipid-based ingredient (12, 12') comprises at least one ingredient selected from milk, plant oil, other lipid-containing ingredients, and a combination thereof in which the argon gas (14) is dissolved under pressure, in particular the milk being selected from the group consisting of cow milk, goat milk, soy milk, almond milk and coconut milk.

15. The beverage according to at least one of claims 11 to 13, wherein the liquid mixture is selected from the group consisting of syrup, coffee, juice, fruit-dairy mixtures, chocolate-dairy mixtures, cow milk, goat milk, soy milk, almond milk and coconut milk.
